# EUROPEAN PATENT APPLICATION

(11) **EP 0 965 437 A1**
(43) Date of publication of application: **22.12.1999**
(21) Application number: 99111614.6
(22) Date of filing: 15.06.1999
(51) Int. Cl.: B29C 63/04, E06B 3/30, B29C 63/02, B32B 35/00, B27D 1/00

(54) **Supporting and positioning element for pressure wheels in machines to cover profiles**

(30) Priority: 18.06.1998 IT UD980102
(71) Applicant: Vettorel, Silverio, 33080 Villanova di Prata (PN) (IT)
(72) Inventor: Vettorel, Silverio, 33080 Villanova di Prata (PN) (IT)
(74) Representative: Petraz, Gilberto

(57) **Abstract**

Supporting and positioning element for pressure wheels in machines to cover profiles, the covering machines having a plane of feed, the pressure wheels being assembled on at least an arm (16), the element comprising a supporting and guiding element (30) defining a guide path (15) at least partly curved or shaped co-operating with the plane of feed of the profile (12), an articulated joint unit (32) suitable to be positioned and moved on the guide path (15) and an arm element (16), supporting at one end a pressure wheel (14), suitable to be supported by the articulated joint unit (32), there being included clamping means to clamp the arm element (16) with respect to the articulated joint unit (32) in a defined position along the guide path (15).

## Description

### FIELD OF THE INVENTION

This invention concerns a supporting and positioning element for pressure wheels in machines to cover profiles as set forth in the main claim.

The invention is applied in machines used to apply a thin covering and enhancing sheet to profiles made of wood, hardboard, plastic, metal or other material used in the field of furnishings and window and door frames.

### BACKGROUND OF THE INVENTION

In the field of furnishing and window/door frames, the state of the art includes machines used to apply, normally under heat, a thin sheet made of PVC, paper or other suitable material, onto a profile, for the purpose of protective covering, enhancement and surface decoration.

Such machines comprise a working plane equipped with drawing elements on which the profile which is to be covered advances, means to feed the covering sheet, normally one or more rolls associated with unwinding devices and with guide means, and means to apply and press the sheet onto the relative profile.

An adhesive substance is applied onto the sheet and/or the profile, and, before it is applied, the sheet is taken to a temperature such as to activate the adhesive properties of the adhesive substance.

There may also be included auxiliary heating means to encourage a stable adhesion.

The means to apply and press the sheet onto the profile normally consist of pressure wheels arranged in sequence in co-operation with the plane of feed of the profiles and mounted on articulated positioning arms which allow them to be arranged in the correct positions in which they can act on the sheet against the profile to be covered.

The most widespread embodiment in these machines provides a plurality of columns or pillars, lying on a plane substantially orthogonal to the plane of feed of the profiles, on which an articulated system is mounted consisting of a chain of two or three arms associated with each other by means of articulated joints, the last of which supports the relative pressure wheel.

This configuration is necessary due to the extreme variability and precision positioning which the pressure wheels must be allowed, particularly in the case of shaped, curved or variously molded profiles, on which the wheels have to be taken with various angles and inclinations to ensure the efficiency of the pressing action and hence that the sheet and the profile are properly coupled.

If the pressure wheels are not made to act correctly, the coupling is not efficacious and the sheet rapidly comes unglued with a consequent deterioration in the quality of the profile covered.

A first problem of this type of embodiment is that it is very complex and costly to achieve, also due to the large number of elements which each covering machine uses.

Another, more important problem is the times taken to equip the covering machine.

It is obvious, in fact, that every time the profile is changed, the whole sequence of the pressure wheels must be re-configured to adapt to the new profile to be covered.

This entails a very long work on the part of the workers to adjust all the articulated arms for each of the elements which support and position the pressure wheels.

If we consider that, in current production cycles, the profile may be changed several times during the course of the day, given that production needs to be more and more specialised and specific, and always less mass-produced, the point may be reached when the time taken to equip the machines may equal or even exceed actual production times.

Another problem is that when the worker loosens the means, normally bolts or similar, which clamp the first articulated arm to the relative pillar or column, all the clamping elements arranged on the opposite side of the bolt, such as nuts, washers or similar, must be held manually to prevent them from falling.

This causes operational difficulties and disadvantages which further increase the equipping times.

The present Applicant has devised and embodied this invention to overcome these problems, which businessmen in this field have long complained of.

### SUMMARY OF THE INVENTION

The invention is set forth and characterised in the main claim, while the dependent claims describe other characteristics of the main embodiment.

The purpose of the invention is to achieve a supporting and positioning element for pressure wheels in machines for covering profiles which, every time the profile is changed, will allow the machine to be equipped very easily and in drastically reduced times compared with those of current covering machines.

Another purpose of the invention is to obtain an extremely simple embodiment, easy to use, economical, highly resistant and therefore needing little maintenance, and also easy to assemble and install on the machine.

A plurality of supporting and positioning elements for pressure wheels according to the invention are arranged in sequence in co-operation with the plane of feed of the profiles to be covered, in accordance with the steps required to apply the covering sheet to the profile.

Each of the elements according to the invention comprises a supporting and guiding element defining a guided path, at least partly curved or shaped, co-operating with the plane of feed of the piece to be covered.

In the preferential embodiment of the invention, the supporting and guiding element lies on a plane substantially orthogonal to the plane of feed of the profiles to be covered.

At least one arm or rod, supporting the relative pressure wheel at one end, is assembled on the supporting and guiding element by means of at least one articulated joint unit.

The articulated joint unit which achieves the assembly of the arm or rod on the supporting and guiding element includes clamping means to fix its position after the arm or rod has been adjusted along the guided path defined by the supporting and guiding element.

This adjustment serves to perform the various angular positionings of the pressure wheel in the space around the profile which is to be acted on.

When the clamping means of the articulated joint unit are loosened, the whole combination consisting of the arm or rod with the relative pressure wheel, together with the articulated joint unit and the means which clamp it to the supporting and guiding element can be displaced along the guided path to the desired position.

Moreover, with the clamping means loosened, the arm or rod can be translated axially with respect to the articulated joint unit, or can be rotated around a rotation axis passing through the articulated joint unit, or yet again can be rotated on its own axis.

The invention therefore allows a first positioning which provides the displacement of the arm or rod on the supporting and guiding element with respect to the plane of feed of the profiles.

A second positioning provides the rotation of the arm or rod, with respect to the articulated joint unit, on a plane substantially parallel to the plane on which the supporting and guiding element lies.

A third positioning provides the axial to-and-fro movement of the arm or rod with respect to the articulated joint unit and a fourth positioning provides the rotation of the arm or rod with respect to its own longitudinal axis.

It is obvious that, of these possible positionings, only those necessary to arrange the pressure wheel in its correct position with respect to the profile are used.

According to a variant, the pressure wheel is associated with the arm or rod with an articulated connection which allows a further positioning movement in the space around the plane of feed of the profiles.

From this explanation it is clear that the equipping manoeuvre is achieved, after releasing the clamping means, with extremely easy and rapid movements which guarantee in any case absolute precision and stability of positioning.

According to one characteristic of the invention, the means which clamp the arm or rod to the supporting and guiding element comprise at least an element, such as a washer or similar, which defines a cradle-type positioning seating such that even when the clamping means are loosened the entire articulated joint unit remains in position on the supporting and guiding element.

This embodiment avoids the need to hold the elements manually, for example during the operations to replace the arm or rod.

### BRIEF DESCRIPTION OF THE DRAWINGS

The attached drawings are given as a non-restrictive example and show a preferred form of embodiment of the invention wherein:
- Fig. 1: shows partly and schematically three supporting and positioning elements according to the invention used on a profile to be covered;
- Fig. 2: shows a front view of the supporting and positioning element according to the invention;
- Fig. 3: is a side view of Fig. 2;

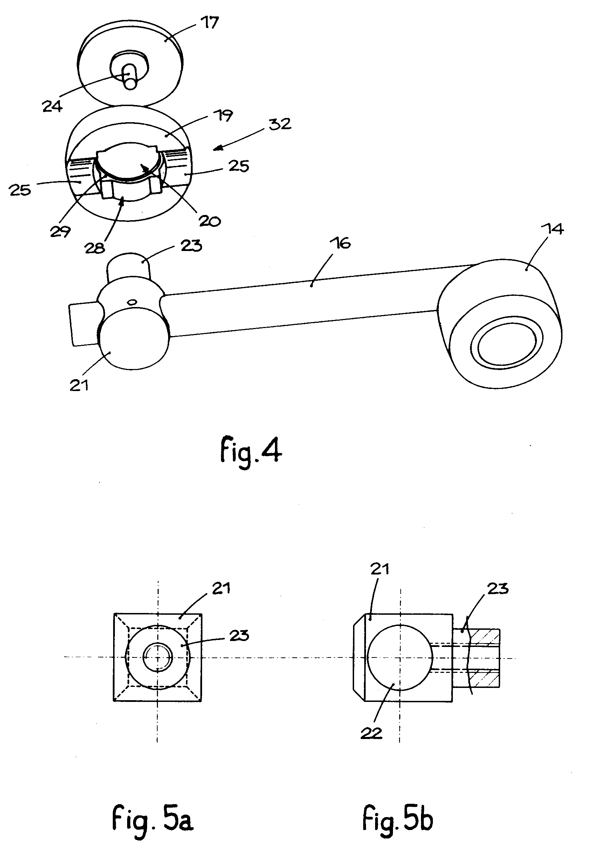

- Fig. 4: is an exploded view of the supporting arm of the pressure wheel according to the invention;
- Figs. 5a and 5b: show, respectively from the front and from the side, a first detail of Fig. 4;

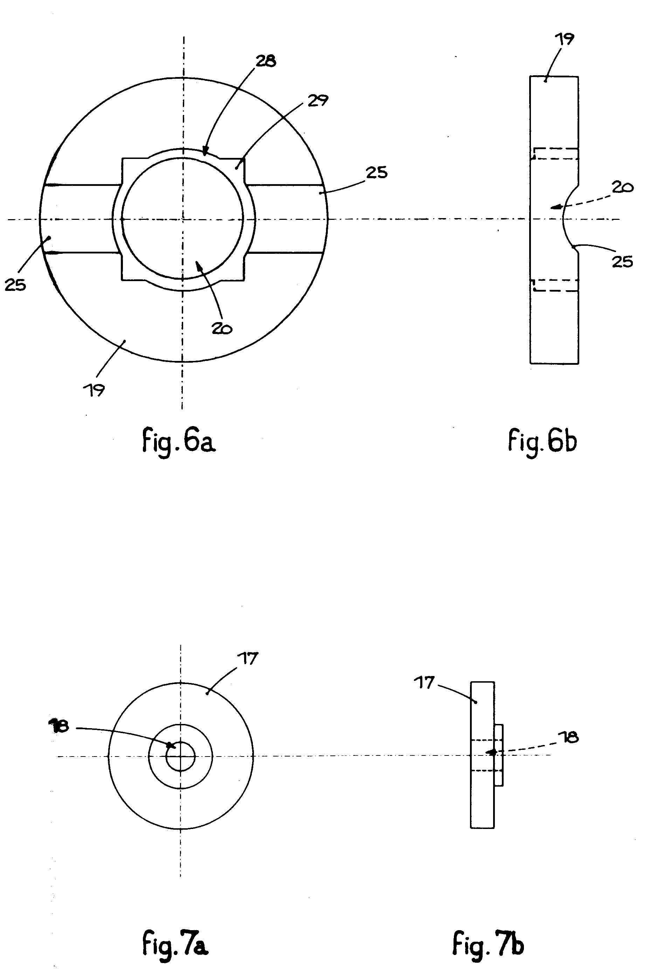

- Figs. 6a and 6b: show, respectively from the front and from the side, a second detail of Fig. 4;
- Figs. 7a and 7b: show, respectively from the front and from the side, a third detail of Fig. 4.

### DETAILED DESCRIPTION OF PREFERRED EMBODIMENT

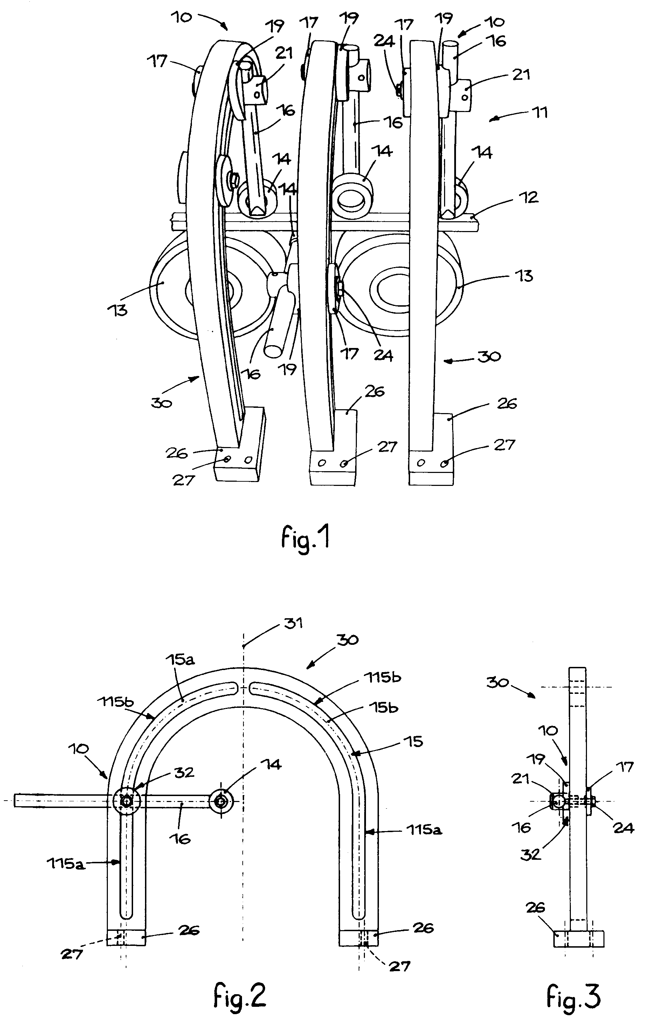

Fig. 1 shows partly and schematically a machine 11, substantially identified by three supporting and positioning elements 10 according to the invention, to cover profiles 12 made of wood, plastic, metal or other material suitable to be covered with enhancing and surface protection sheets or film.

Such machines are known in the state of the art and therefore are not described here in particular detail.

The machine 11 has a plane of feed for the profiles 12 associated with drawing means, in this case wheels 13.

The wheels 13 carry the profiles 12, to which the surface covering sheet (not shown) has already been applied by means of an adhesive, to co-operate in sequence with a plurality of pressure wheels 14 arranged in succession.

The function of the pressure wheels 14 is to make the covering sheet adhere perfectly to the surface of the profile 12, whatever its shape and its surface conformation may be.

The pressure wheels 14 act on the profile 12 on all its sides and with various angles so as to be able to press the sheet even when there are moldings, hollows, edges, curves or other means of aesthetic adornment defined on the surface of the profile 12.

The pressure wheels 14 are mounted on a supporting and positioning element 10 according to the invention, shown in its entirety in Figs. 2 and 3.

Fig. 1 shows, for the purposes of illustration, only three elements 10 according to the invention, but it should be noted that in a covering machine 11 there may be many such elements 10 arranged in succession, as many as 20÷30 or even more, according to the type and dimension of the machine 11, the type of sheet applied, the adhesive used, etc.

The supporting and positioning element 10 according to the invention has a supporting and guiding element 30 which, in this case, is substantially bow-shaped defining a guide path 15.

The guide path 15, in this case, consists of two sections, respectively 15a and 15b, which are equal to each other and symmetrical with respect to the longitudinal axis 31 of the element 30.

It is within the scope of the invention to provide that the supporting and guiding element 30 has a different shape from the one shown here, for example circular, polygonal or segmented.

The supporting and guiding element 30 is normally fixed and lies on a plane which, normally, is substantially orthogonal to the plane of feed of the profile 12 which is to be covered.

In this case, the guide path 15, hereafter called simply guide, consists of a through cavity made on the width of the supporting and guiding element 30, but this is merely an example and not restrictive.

The guide 15 could also have a segmented shape, for example pentagonal or rectangular, provided it is arranged in such a way as to cover the axis of feed of the profile 12 from side to side, so as to be able to position the pressure wheel 14 in any desired position whatsoever with respect to the profile 12.

The sections 15a and 15b have a first straight segment 115a which, in the position of use, is substantially vertical and orthogonal to the plane of feed of the profiles 12, and a second, curved segment 115b, curved like the arc of a circle and facing towards the curved segment 115b of the adjacent section 15b.

The supporting and positioning element 10 also consists of an arm 16, at the end of which the respective pressure wheel 14 is mounted.

The arm 16 is suitable to be coupled with the supporting and guiding element 30, in particular with the guide 15 made thereon, by means of an articulated joint assembly unit 32 which allows at least four different positionings of the relative pressure wheel 14 in the space around the profile 12 on which the wheel 14 has to act.

The four positionings, according to four respective axes, allow to take the wheel 14 to any position whatsoever and with any required angle to make the covering sheet adhere on all points of the surface of the profile 12.

To be more exact, the arm 16 may be displaced along the guide 15 of the element 30 to be positioned with respect to the profile 12, it may be rotated on a substantially vertical plane having as its center the point where it is assembled on the supporting and guiding element 30, it may rotate around its own longitudinal axis and it may slide axially forwards or backwards to bring the wheel 14 nearer to/farther from the profile 12.

The articulated joint assembly unit 32 substantially consists of three elements, respectively a first washer 17 with an axial through hole 18, a second cradle-type washer 19 with an axial through hole 20 and a clamp 21 with a shank 23 which is inserted into the through hole 20.

Around the through hole 20, the cradle-type washer 19 has a dead hole 28, with a greater diameter than the hole 20, which defines a positioning seating 29 for the clamp 21 so that, even during the operations to replace the arm 16, the three components 17, 19 and 21 are not separated.

The positioning seating 29 is extremely important and useful inasmuch as it obviates the need to hold the elements 17, 19 and 21 manually even when the clamping means of the articulated joint unit 32 are partly loosened, for example to remove and replace the arm 16.

The hole 28 may have a square cross-section in the event that clamps of a square section are used.

The clamp 21 has a hole 22, transverse to its longitudinal axis, for the insertion and axial sliding of the arm 16.

The arm 16 is assembled on the supporting and guiding element 30 by screwing a clamping screw 24, in this case with a hexagonal head, between the first washer 17, arranged on one side of the element 30, and the shank 23 of the clamp 21, arranged on the opposite side of the element 30.

The clamping screw 24 is inserted through the through guide 15.

Instead of the clamping screw, it is possible to use an Allen screw for example, or any other similar element.

The second washer 19 is arranged between the wall of the element 30 and the shank 23 of the clamp 21, and has hollows 25 for the positioning and axial sliding of the arm 16.

The hollows 25, in this case, are semicircular, but they can be of any other conformation, for example V-shaped, or any other suitable shape.

The two washers 17 and 19 are obviously wider than the guide 15.

When the clamping crew 24 is tightened, it simultaneously clamps the arm 16 in a defined position with respect to the guide 15, the clamp 21 with respect to the cradle-type washer 19 and the arm or rod 16 with respect to the clamp 21.

When the clamping crew 24 is loosened, the combination consisting of the arm 16 and the assembly elements 17, 19 and 21 of the articulated joint unit 32 can be displaced along the guide 15 to be correctly positioned with respect to the profile 12.

When the clamping crew 24 is further loosened, the arm 16 can be made to slide axially along the hollows 25 of the second cradle-type washer 19 and/or made to rotate around the axis of the screw 24, making the washer 19 rotate too; it may possibly be made to rotate on its own longitudinal axis.

Since the guide 15 is a through guide, it is extremely easy and quick to detach or assemble the arm or rod 16 onto/from the relative supporting and positioning element 10.

It is also obvious that several arms 16 may be assembled on the same element 30, with the relative assembly elements, to press on the periphery of the profile 12 at several points.

According to a variant which is not shown here, the pressure wheel 14 is associated with the end of the arm 16 by means of an articulated joint which allows a further possibility of movement with respect to the profile 12.

The supporting and guiding element 30 has two bases 26 with holes 27 into which elements may be inserted to attach it to the plane of the covering machine 11.

It can be seen, therefore, how a single clamping screw, in this case the screw 24, releases or constrains the movements on four axes, with extremely easy and rapid positioning manoeuvres, also allowing the arm 16 to be rapidly replaced in the event of changes in the process and/or profile 12.

The elements of the articulated joint unit 32 are also guaranteed to be maintained in position even during the operations to replace the arm 16, which makes these operations even easier and quicker.

## Claims

1. Supporting and positioning element for pressure wheels in machines to cover profiles, the covering machines having a plane of feed associated with means (13) to draw the profiles (12), the pressure wheels being assembled on at least an arm, the element being characterised in that it comprises a supporting and guiding element (30) defining a guide path (15) at least partly curved or shaped co-operating with the plane of feed of the profile (12), an articulated joint unit (32) suitable to be positioned and moved on the guide path (15) and an arm element (16), supporting at one end a pressure wheel (14), suitable to be supported by the articulated joint unit (32), there being included clamping means to clamp the arm element (16) with respect to the articulated joint unit (32) in a defined position along the guide path (15).

2. Element as in Claim 1, characterised in that the articulated joint unit (32) consists of a first washer (17) with an axial through hole (18), a second cradle-type washer (19) with an axial through hole (20), and a clamp (21) with a shank (23) which is inserted into the through hole (20) of the second cradle-type washer (19).

3. Element as in Claim 2, characterised in that, around the through hole (20), the second cradle-type washer (19) has a dead hole (28), with a greater diameter than the hole (20), the dead hole (28) defining a positioning seating (29) suitable to maintain the first washer (17), the second washer (19) and the clamp (21) in position, even during the operations to remove and replace the arm (16).

4. Element as in Claim 2, characterised in that the clamp (21) has a through hole (22) transverse to its longitudinal axis, for the insertion and axial sliding of the arm (16).

5. Element as in Claim 1, characterised in that the clamping means comprise a screw element (24).

6. Element as in Claim 2 and 5, characterised in that the screw element (24) is associated with the first washer (17), is arranged on one side of the supporting and guiding element (30) and is suitable to be associated with the shank element (23) associated with the clamp (21), the clamp (21) being arranged on the opposite side of the supporting and guiding element (30) with respect to the first washer (17).

7. Element as in Claim 6, characterised in that the second cradle-type washer (19) is interposed between the first washer (17) and the clamp (21) and is arranged on the same side of the supporting and guiding element (30) where the clamp (21) is arranged.

8. Element as in Claim 2, characterised in that the second washer (19) includes hollows (25) for the positioning and axial sliding of the arm (16).

9. Element as in Claim 8, characterised in that the hollows (25) are semicircular.

10. Element as in Claim 8, characterised in that the hollows (25) are V-shaped.

11. Element as in any claim hereinbefore, characterised in that the arm (16) is suitable, with the clamping screw (24) loosened, to be moved along the guide path (15) together with the relative articulated joint unit (32), to be rotated around an axis of rotation passing through the articulated joint unit (32), to be translated axially along the hollows (25) and to be rotated on its own longitudinal axis.

12. Element as in Claim 1, characterised in that the supporting and guiding element (30) lies on a plane substantially orthogonal to the plane of advance of the profiles (12) to be covered.

13. Element as in Claim 1, characterised in that the guide path (15) consists of a through cavity made on the width of the supporting and guiding element (30).

14. Element as in Claim 1, characterised in that the supporting and guiding element (30) is bow-shaped.

15. Element as in Claim 1, characterised in that the supporting and guiding element (30) is circular in shape.

16. Element as in Claim 1, characterised in that the supporting and guiding element (30) is polygonal in shape.

17. Element as in Claim 1, characterised in that a plurality of arms (16) are suitable to be associated with the same supporting and guiding element (30) in different positions along the guide path (15).

18. Element as in Claim 1, characterised in that the supporting and guiding element (30) has bases (26) with holes (27) to attach it to the plane of the covering machine (11).

19. Element as in Claim 1, characterised in that the pressure wheel (14) is associated with the arm (16) by means of an articulated connection.
